# EUROPEAN PATENT SPECIFICATION

(11) **EP 2 752 274 B1**
(45) Date of publication and mention of the grant of the patent: **30.12.2020**
(21) Application number: 12828034.4
(22) Date of filing: 02.08.2012
(51) Int. Cl.: B25J 9/16, G05B 19/404, G05B 19/402

(54) **CONTROL METHOD AND CONTROL DEVICE**
STEUERUNGSVERFAHREN UND STEUERUNGSVORRICHTUNG
PROCÉDÉ DE COMMANDE ET DISPOSITIF DE COMMANDE

(30) Priority: 01.09.2011 JP 2011190637
(43) Date of publication of application: 09.07.2014
(73) Proprietor: KABUSHIKI KAISHA KOBE SEIKO SHO (KOBE STEEL, LTD.), Hyogo 651-8585 (JP)
(72) Inventor: WADA, Takashi, Kobe-shi, Hyogo 651-2271 (JP); NISHIDA, Yoshiharu, Kobe-shi, Hyogo 651-2271 (JP); INADA, Shuichi, Fujisawa-shi, Kanagawa 251-0014 (JP); INOUE, Yoshihide, Fujisawa-shi, Kanagawa 251-0014 (JP)
(74) Representative: Müller-Boré & Partner Patentanwälte PartG mbB
(86) International application number: PCT/JP2012/069645
(87) International publication number: WO 2013/031465

(56) References cited:
- JP-A- H0 215 311
- JP-A- H03 201 106
- JP-A- H04 135 217
- JP-A- H10 268 916
- JP-A- 2000 250 614
- JP-A- 2004 234 205
- JP-Y2- 2 564 722
- US-A- 5 059 881
- US-A1- 2006 017 415
- US-B1- 6 252 368
- TADOKORO S ET AL: "An experimental study on improvement of weaving trajectories of welding robots by a learning scheme", INDUSTRIAL ELECTRONICS, CONTROL, AND INSTRUMENTATION, 1993. PROCEEDING S OF THE IECON '93., INTERNATIONAL CONFERENCE ON MAUI, HI, USA 15-19 NOV. 1993, NEW YORK, NY, USA,IEEE, 15 November 1993 (1993-11-15), pages 1500-1505, XP010109232, DOI: 10.1109/IECON.1993.339285 ISBN: 978-0-7803-0891-6

## Description

### Technical Field

The present invention relates to a control method and a control device suitable for position control of an industrial robot or the like that includes a motor and a speed reducer.

### Background Art

For example, a welding robot is a six-axis vertical articulated industrial robot, in which the tip of an arm is provided with a welding tool formed by a welding torch or the like. A joint unit, which is a driving unit of the welding robot, includes a motor serving as a driving source, and a speed reducer configured to transmit a driving force of the motor to the arm. The motor in the joint unit includes a position detector, such as an encoder, that detects the rotational position of the motor.

To the welding robot having the joint unit, a position command signal indicating a rotational position of the motor is given from the outside. Then, the rotation of the motor is controlled such that motor position information detected by the position detector matches a commanded position indicated by the position command signal. The rotation of the motor under such control is transmitted through the speed reducer to the arm, so that the welding torch or the like at the tip of the arm moves to a desired position.

As is well known, a speed reducer formed by combining a plurality of gears has backlash, which contributes to a positional deviation of an arm. An attempt has been made to eliminate the positional deviation of the arm. Specifically, the attempt involves obtaining the amount of backlash in the speed reducer in advance, adding a correction signal for compensating for the amount of backlash to a position command signal so as to generate a position command correction signal, and giving the position command correction signal to the welding robot to eliminate the positional deviation of the arm.

As means of eliminating the positional deviation of the arm, there are techniques disclosed in Patent Literatures (PTLs) 1 and 2 listed below.

PTL 1 discloses a robot control device that includes a position control unit and a backlash correcting unit. The position control unit is a servo mechanism configured to compare a command position signal with a position signal which is an output signal of position detecting means, and perform control such that a tip of an arm is located at a predetermined position specified by the command position signal. After each arm is moved to a predetermined position and a motor rotates by more than or equal to a predetermined amount of backlash in a speed reducer in the same direction as that in positioning for associating the position signal of the position detecting means with the position of the arm, if reversal of the rotation direction of the motor is detected, the backlash correcting unit performs backlash correction which involves adding the amount of correction corresponding to the amount of backlash to the command position signal, and thus eliminates the effect of backlash.

This control device is described as being capable of always performing appropriate backlash correction, and causing the hand tip position of the robot to accurately follow the commanded position.

PTL 2 discloses a numerical control device that includes control direction detecting means for monitoring a position command value for a control object, and detecting a control direction for controlling the control object; correction command value updating means for updating a backlash correction command value depending on the time elapsed after the control direction detected by the control direction detecting means is reversed; and control means for adding the backlash correction command value updated by the correction command value updating means to the position command value, and controlling the rotation of a motor that drives the control object on the basis of the result of the addition.

This numerical control device is described as being capable of compensating for backlash and accurately compensating for elastic deformation that occurs when the direction of movement of the control object is reversed.

PTL 3 discloses a backlash compensation for a numerical control apparatus. Backlash compensation is intelligently applied based on a judgment as to a change in direction or velocity commanded for a cutting tool, table, or the like. Backlash compensation data is stored into a memory of a numerical control apparatus. A judgement is made as to the necessity of backlash compensation, based on velocity data of the feed mechanism, and deciding whether the feed mechanism is being stopped or reversed. Compensation data is output to a servo drive unit.

PTL 4 discloses a backlash compensation device for use with a numerically controlled system compensates for a position command signal used to drive and control an object to be controlled. The device includes a reversal detecting unit for detecting a reversal of a direction of driving the object to be controlled based on a reversal of an upward or downward trend in the level of an applied position command signal. A maximum backlash signal generating unit generates a maximum backlash signal corresponding to a maximum value of backlash error every time a reversal of a direction of driving the object is detected. A filter then reduces the level of the maximum backlash signal according to how much time has elapsed since the detected reversal of the driving direction. An adder adds the reduced maximum backlash signal from the filter to the position command signal.

PTL5 describes parameters of a weaving trajectory consisting of amplitudes and phases which are learned so that an evaluating function of error which is computed from accelerometer data is minimized. Two methods of learning are applied to robot manipulators: a basic method with high stability and a high speed algorithm using a model.

### Citation List

### Patent Literature

PTL 1: Japanese Registered Utility Model No. 2564722
PTL 2: Japanese Unexamined Patent Application Publication No. 2004-234205
PTL 3: US 5,059,881
PTL 4: US 6,252,368 B1
PTL 5: TADOKORO S ET AL, "An experimental study on improvement of weaving trajectories of welding robots by a learning scheme", INDUSTRIAL ELECTRONICS, CONTROL, AND INSTRUMENTATION, 1993. PROCEEDING S OF THE IECON '93., INTERNATIONAL CONFERENCE ON MAUI, HI, USA 15-19 NOV. 1993, NEW YORK, NY, USA,IEEE, (19931115), doi:10.1109/IECON.1993.339285, ISBN 978-0-7803-0891-6, pages 1500 - 1505, XP010109232 [A]

### Summary of Invention

The invention is defined by the independent claims. The dependent claims define advantageous embodiments.

### Technical Problem

However, even with the robot control device disclosed in PTL 1, it may be difficult to always perform appropriate backlash correction.

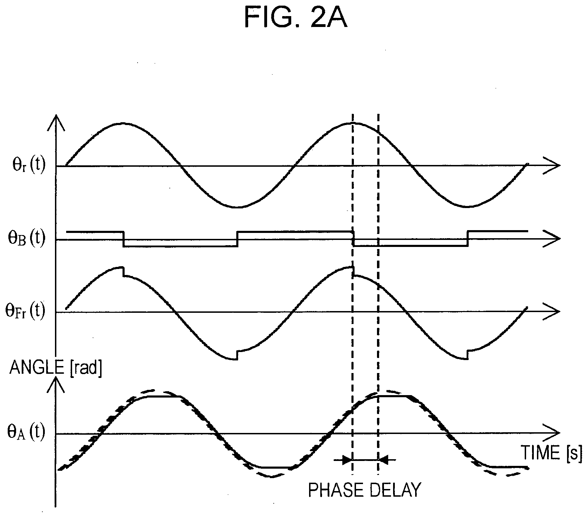

For example, in the case where the arm of the robot is swung from side to side with respect to a weld line in weaving, even when backlash correction (backlash compensation) is performed in accordance with a conventional procedure illustrated in Fig. 2A, it is difficult to eliminate the effect of backlash on the motion of the arm.

A conventional backlash correction will now be described on the basis of Fig. 2A.

When the arm is swung from side to side in weaving, in other words, when a position command signal θr(t) indicating a rotational position of the motor is a periodic signal like a sine wave, the reciprocating motion (in particular, reciprocating reversal) of the arm is delayed in phase from the position command signal θᵣ(t) due to the effect of backlash in the speed reducer. As a result, before the direction of motion of the arm is actually reversed, a control direction indicated by the position command signal θᵣ(t) is reversed. A direction indicated by a stepped backlash quantity signal θ_{B}(t) for compensating for the amount of backlash is reversed at peak positions of the position command signal θᵣ(t), that is, at the same time as the time when the control direction of the position command signal θᵣ(t) is reversed. Therefore, a final position command signal θ_{Fr}(t) is generated by adding, to the position command signal θᵣ(t) whose control direction is reversed before the position where the reciprocating motion of the arm should be reversed, the backlash quantity signal θ_{B}(t) whose direction is also reversed before the position where the reciprocating motion of the arm should be reversed. The waveform of the final position command signal θ_{Fr}(t) shown in Fig. 2A has, at peak positions of the position command signal θᵣ(t), steps caused by the backlash quantity signal θ_{B}(t).

When the final position command signal θ_{Fr}(t) is input to the robot to control the arm, the control direction indicated by the final position command signal θ_{Fr}(t) is reversed before the position where the reciprocating motion of the arm should be reversed. Therefore, the amplitude of the reciprocating motion of the arm (i.e., a rotation angle θ_{A}(t) of the arm) indicated by a solid line is smaller than the amplitude of the original position command signal θᵣ(t) indicated by a broken line. This means that the effect of backlash on the reciprocating motion of the arm cannot be eliminated.

That is, as compared to the case where the speed reducer has no backlash and a position command signal is thus directly input to the robot without addition of a correction signal for compensating for the amount of backlash to the position command signal, the behavioral range (amplitude of reciprocation) of the arm in PTL 1 is smaller.

The numerical control device disclosed in PTL 2 has a transfer function filter. The transfer function filter is obtained by modeling a transfer function from friction acting on the arm to a deviation between the position of the arm and the position of the motor. This filter converts a rectangular-wave backlash quantity signal to a smooth signal.

However, as in PTL 1, if the position command signal is a periodic signal like a sine wave, the reciprocating motion of the arm is delayed in phase from the position command signal. Therefore, before the reciprocating motion of the arm is actually reversed, the position command signal is reversed and the backlash quantity signal is also reversed. Even though the backlash quantity signal is smoothed out by the filter, the amplitude of the reciprocating motion of the arm is smaller than that in the case where the speed reducer has no backlash, as in PTL 1.

In view of the problems described above, the present invention aims to provide a control method and a control device that can make, when a position command signal indicating a position of a control object such as an industrial robot is a periodic signal like a sine wave, the behavioral range (amplitude of reciprocation) of the control object the same as that in the case where a speed reducer has no backlash, or the same as the amplitude of the position command signal.

### Solution to Problem

To achieve the object described above, the present invention adopts the following technical means.

A control method according to the present invention is a control method that performs position control of a control object while compensating for backlash in the control object, the control object being configured to move periodically. The control method includes a final position command signal generating step of generating a final position command signal by shifting a backlash quantity signal that compensates for the backlash and adding the backlash quantity signal to a position command signal indicating a position of the control object; and a position control step of performing position control of the control object on the basis of the final position command signal generated in the final position command signal generating step.

Preferably, the final position command signal generating step may include a position command signal generating step of generating the position command signal; a control direction detecting step of detecting, on the basis of the position command signal generated in the position command signal generating step, a control direction for controlling the control object; a backlash quantity calculating step of generating, in accordance with the control direction detected in the control direction detecting step, a backlash quantity signal for compensating for the amount of backlash in the control object; a delay time calculating step of generating a backlash correction signal by delaying, by a predetermined delay time with respect to the position command signal, the backlash quantity signal generated in the backlash quantity calculating step; and a signal adding step of generating a final position command signal by adding the backlash correction signal generated in the delay time calculating step to the position command signal. The position control step may control the position of the control object on the basis of the final position command signal generated in the signal adding step.

Preferably, a length of time less than or equal to half a period of the position command signal formed by a periodic signal may be set as the predetermined delay time used in the delay time calculating step.

Preferably, an actual output of the control object driven on the basis of the position command signal formed by a periodic signal may be determined in advance, a phase difference between the position command signal and the actual output may be determined, and the determined phase difference may be set as the predetermined delay time used in the delay time calculating step.

Preferably, a control model obtained by modeling the control object may be prepared; and a model output obtained when the position command signal formed by a periodic signal is input to the control model may be determined, a phase difference between the position command signal and the model output may be determined, and the determined phase difference may be set as the predetermined delay time used in the delay time calculating step.

Preferably, an actual output of the control object driven on the basis of the position command signal formed by a step signal may be determined in advance, a time constant based on a response time required for the actual output to reach the position indicated by the position command signal may be determined, and the time constant may be set as the predetermined delay time used in the delay time calculating step.

A control device according to the present invention is a control device that performs position control of a control object while compensating for backlash in the control object, the control object being configured to move periodically. The control device includes a controller configured to generate a final position command signal by shifting a backlash quantity signal that compensates for the backlash and adding the backlash quantity signal to a position command signal indicating a position of the control object, the controller being configured to perform position control of the control object on the basis of the generated final position command signal.

Preferably, the controller may include a position command signal generating unit configured to generate the position command signal; a control direction detecting unit configured to detect, on the basis of the position command signal generated by the position command signal generating unit, a control direction for controlling the control object; a backlash quantity calculating unit configured to generate, in accordance with the control direction detected by the control direction detecting unit, a backlash quantity signal for compensating for the amount of backlash in the control object; a delay time calculating unit configured to generate a backlash correction signal by delaying, by a predetermined delay time with respect to the position command signal, the backlash quantity signal generated by the backlash quantity calculating unit; a signal adding unit configured to generate a final position command signal by adding the backlash correction signal generated by the delay time calculating unit to the position command signal; and a position control unit configured to control the position of the control object on the basis of the final position command signal generated by the signal adding unit.

### Advantageous Effects of Invention

When a position command signal indicating a position of a control object, such as an industrial robot, is a periodic signal like a sine wave, the control method and the control device according to the present invention can make the behavioral range (amplitude of reciprocation) of the control object the same as that in the case where a speed reducer has no backlash, or the same as the amplitude of the position command signal.

### Brief Description of Drawings

[Fig. 1] Fig. 1 schematically illustrates a configuration of a control device and a robot according to a first embodiment of the present invention.
[Fig. 2A] Fig. 2A is a graph showing temporal changes of each signal in conventional backlash quantity compensation.
[Fig. 2B] Fig. 2B is a graph showing temporal changes of each signal in backlash quantity compensation according to the first embodiment of the present invention.
[Fig. 3] Fig. 3 shows angular transmission of a speed reducer having backlash.
[Fig. 4] Fig. 4 is a flowchart of processing in the backlash quantity compensation according to the first embodiment.
[Fig. 5] Fig. 5 illustrates in detail how signals change in the backlash quantity compensation according to the first embodiment.
[Fig. 6A] Fig. 6A illustrates an effect of the backlash quantity compensation according to the first embodiment.
[Fig. 6B] Fig. 6B illustrates an effect of the backlash quantity compensation according to the first embodiment.
[Fig. 6C] Fig. 6C illustrates an effect of the backlash quantity compensation according to the first embodiment.
[Fig. 7] Fig. 7 is a graph showing a frequency response of a rotation angle of an arm according to a second embodiment of the present invention.
[Fig. 8] Fig. 8 illustrates an effect of backlash quantity compensation according to the second embodiment.
[Fig. 9] Fig. 9 is a graph showing a step response of a rotation angle of an arm according to a third embodiment of the present invention.
[Fig. 10] Fig. 10 illustrates an effect of backlash quantity compensation according to the third embodiment.
[Fig. 11] Fig. 11 is a block diagram obtained by modeling a process from a final position command signal to a rotation angle of an arm in backlash quantity compensation according to a fourth embodiment of the present invention.

### Description of Embodiments

Each embodiment of the present invention will now be described on the basis of the drawings. In the following description, the same components are given the same reference numerals. Names and functions of the same components are also the same. Therefore, a detailed description of the same components will not be repeated.

### [First Embodiment]

A control method and a control device for controlling an arm according to a first embodiment of the present invention will be described with reference to the drawings.

An overall configuration of a robot system 1 will be described, to which the control method and the control device of the present embodiment are applied.

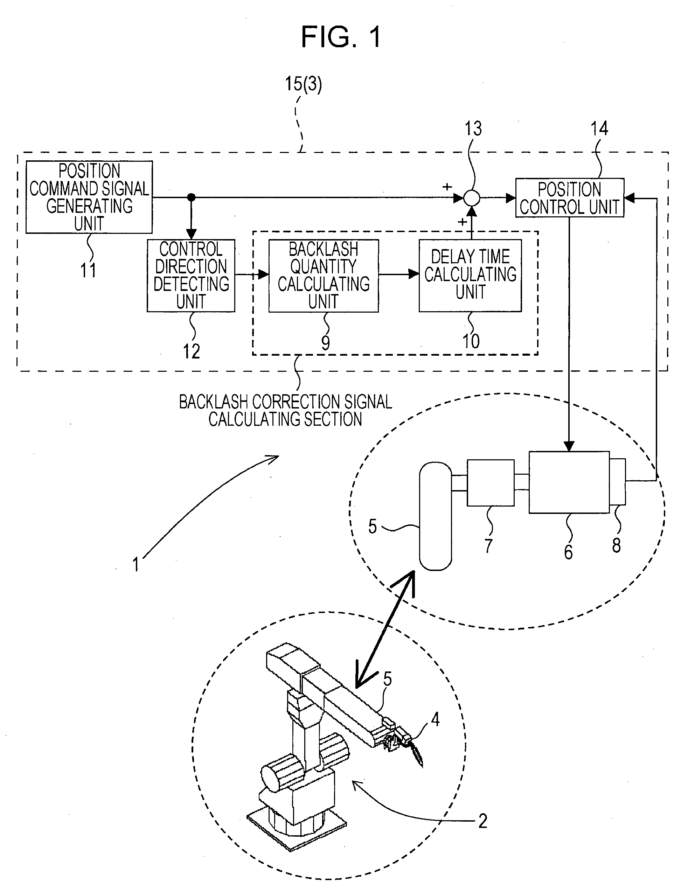

As illustrated in Fig. 1, the robot system 1 includes a robot (welding robot) 2 configured to perform a welding operation, a control device 3 configured to control the operation of the welding robot 2, and a teach data generating device formed by an information processing device, such as a personal computer. The teach data generating device is not shown in Fig. 1.

The welding robot 2 is a six-axis vertical articulated industrial robot having a tip provided with a welding tool 4 formed, for example, by a welding torch. The welding robot 2 may be mounted on a slider (not shown) configured to move the welding robot 2.

As illustrated in Fig. 1, a joint that connects each arm of the welding robot 2 includes a motor 6, a speed reducer 7, and an encoder 8. For example, an arm 5 to which the welding tool 4 is attached is connected via the speed reducer 7 to the motor 6. The motor 6 which is a control object is rotated by an instruction from the control device 3 (described below). The rotation of the motor 6 is slowed down by the speed reducer 7 and transmitted to the arm 5 which is also a control object.

The encoder 8 is a device attached to the motor 6. The encoder 8 detects a rotation angle of the motor 6, and outputs the detected rotation angle as a rotation angle signal to the control device 3.

The speed reducer 7 attached to the motor 6 has backlash because it is formed by a plurality of gears. Therefore, when the rotation direction of the motor 6 is reversed to cause the speed reducer 7 moving in the forward direction to move backward, the backlash causes a time difference to occur, at the moment of the reversal, between the time when the motor 6 starts to rotate backward and the time when the speed reducer 7 starts (outputs) a backward motion. That is, the presence of backlash causes an error phenomenon in which, when the rotation direction of the motor 6 is reversed, the rotation of the motor 6 does not match the motion (output) of the speed reducer 7.

To compensate for the error (i.e., to eliminate the error phenomenon) caused by the backlash, the control device 3 of the present invention includes a backlash quantity calculating unit 9 and a delay time calculating unit 10, which will be described in detail later on.

The control device 3 included in the robot system 1 controls the operation of the welding robot 2 in accordance with a teach program taught in advance. The teach program may be generated by using a teach pendant connected to the control device 3, or may be generated off-line by using a teach data generating device (not shown). In either case, the teach program is generated in advance before the welding robot 2 actually performs a welding operation. The teach program generated by using the teach data generating device may be passed, through a medium or the like that magnetically or electrically stores data, to the control device 3, or may be transferred to the control device 3 by data communication.

The control device 3 has a controller 15 that includes a position command signal generating unit 11, a control direction detecting unit 12, the backlash quantity calculating unit 9, the delay time calculating unit 10, a signal adding unit 13, and a position control unit 14.

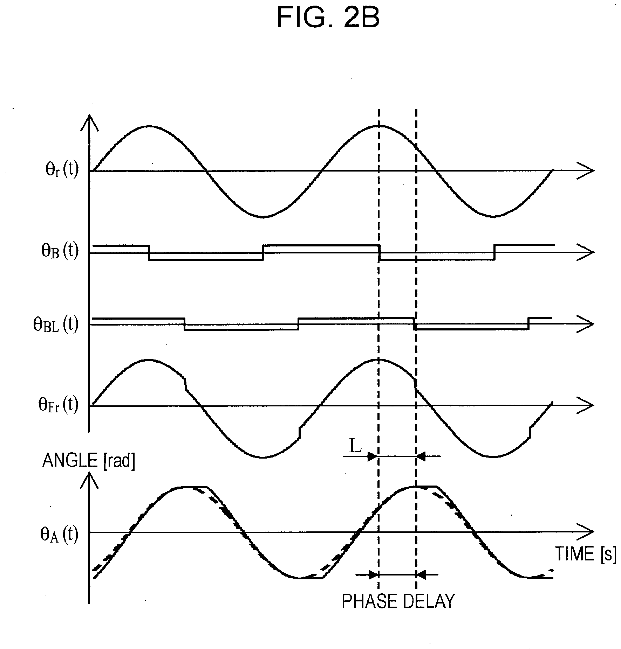

Each component of the control device 3 will be described with reference to Fig. 1, Fig. 2A, and Fig. 2B.

To control a rotation angle position of the arm 5, the position command signal generating unit 11 generates and outputs a position command signal θᵣ(t) for specifying a rotation angle position of the motor 6 corresponding to the rotation angle position of the arm 5.

As illustrated in Fig. 2B, the position command signal θᵣ(t) is a signal that periodically changes like a sine wave and indicates the rotation angle position of the motor 6 (such that the rotation control direction for controlling the motor 6 periodically changes). The signal that periodically changes is emitted in weaving or the like when the arm 5 is swung from side to side with respect to a weld line.

The control direction detecting unit 12 detects the rotation control direction for controlling the motor 6 from the position command signal output from the position command signal generating unit 11, and outputs a stepped control direction signal having a positive or negative value of 1 in accordance with the control direction.

The value of the control direction signal changes from positive to negative or negative to positive at a peak position of the position command signal θᵣ(t). That is, the waveform of the control direction signal changes in a stepped manner from a value of 1 to a value of -1 or from a value of -1 to a value of 1 at a peak position of the position command signal θᵣ(t).

When the control direction is not reversed, the control direction detecting unit 12 continues to output a control direction signal with the same value. In the initial state, the control direction detecting unit 12 outputs a control direction signal with a value of 0.

The backlash quantity calculating unit 9 multiplies the control direction signal output from the control direction detecting unit 12 by a predetermined backlash compensation gain B to generate and output a backlash quantity signal θ_{B}(t). The backlash quantity signal θ_{B}(t) is a signal obtained by multiplying a stepped control direction signal having a positive or negative value of 1 by the backlash compensation gain B. Therefore, the backlash quantity signal θ_{B}(t) has a stepped waveform like the control direction signal.

The backlash quantity signal θ_{B}(t) shown in Fig. 2B is obtained by multiplying the control direction signal by the backlash compensation gain B. Therefore, like the control direction signal, the value of the backlash quantity signal θ_{B}(t) changes in a stepped manner from positive to negative or negative to positive at a peak position of the position command signal θᵣ(t). That is, each peak position of the position command signal θᵣ(t) coincides with the corresponding position at which the value of the backlash quantity signal θ_{B}(t) changes in a stepped manner.

The value of the backlash compensation gain B is set such that the value of the backlash quantity signal θ_{B}(t) has a magnitude corresponding to the amount of backlash in the speed reducer 7.

The delay time calculating unit 10 generates a backlash correction signal θ_{BL}(t) by delaying, by a given time L (delay time L), the backlash quantity signal θ_{B}(t) output from the backlash quantity calculating unit 9, and outputs the backlash correction signal θ_{BL}(t).

The backlash correction signal θ_{BL}(t) shown in Fig. 2B has a waveform obtained by delaying (shifting) the backlash quantity signal θ_{B}(t) by the delay time L. That is, each position at which the value of the backlash correction signal θ_{BL}(t) changes in a stepped manner is delayed (shifted) by the delay time L from the corresponding peak position of the position command signal θᵣ(t).

Note that the backlash quantity calculating unit 9 and the delay time calculating unit 10 are collectively referred to as a backlash correction signal calculating section.

The signal adding unit 13 adds the backlash correction signal θ_{BL}(t) output from the delay time calculating unit 10 to the position command signal θᵣ(t) output from the position command signal generating unit 11 to generate and output a final position command signal θ_{Fr}(t).

Fig. 2B shows the final position command signal θ_{Fr}(t) generated by adding the backlash correction signal θ_{BL}(t) to the position command signal θᵣ(t). Since the backlash correction signal θ_{BL}(t) is delayed by the delay time L from each peak position of the position command signal θᵣ(t), the corresponding step of the waveform of the final position command signal θ_{Fr}(t) caused by the backlash correction signal θ_{BL}(t) is also delayed by the delay time L.

The position control unit 14 calculates a command voltage of the motor 6 and controls the rotational position of the motor 6 such that the rotation angle signal of the motor 6 detected by the encoder 8 follows the final position command signal θ_{Fr}(t) output from the signal adding unit 13. Under the control of the position control unit 14, the motor 6 operates to drive the arm 5 through the speed reducer 7.

Fig. 2B shows that in the control according to the final position command signal θ_{Fr}(t) obtained by adding the backlash correction signal θ_{BL}(t) to the position command signal θᵣ(t), the amplitude of a rotation angle θ_{A}(t) of the arm 5 can be made substantially the same as the amplitude of the original position command signal θᵣ(t) indicated by a broken line.

In the present embodiment, where the backlash correction signal θ_{BL}(t) which is delayed by the delay time L is used, it is possible to eliminate the effect of backlash on the reciprocating motion of the arm 5 which cannot be eliminated by the procedure of the conventional backlash compensation illustrated in Fig. 2A.

The necessity for adopting the backlash correction signal θ_{BL}(t) delayed by the delay time L will be described from another perspective by using, as an example, the case where weaving is performed by the robot system 1 having the configuration described above.

As described above, weaving involves swinging the arm 5 having the welding tool 4 at the tip thereof from side to side with respect to a weld line. In other words, the position control unit 14 causes the arm 5 to reciprocate by controlling the rotational position of the motor 6 in accordance with the position command signal θᵣ(t) which is a periodic signal like a sine wave or the final position command signal θ_{Fr}(t).

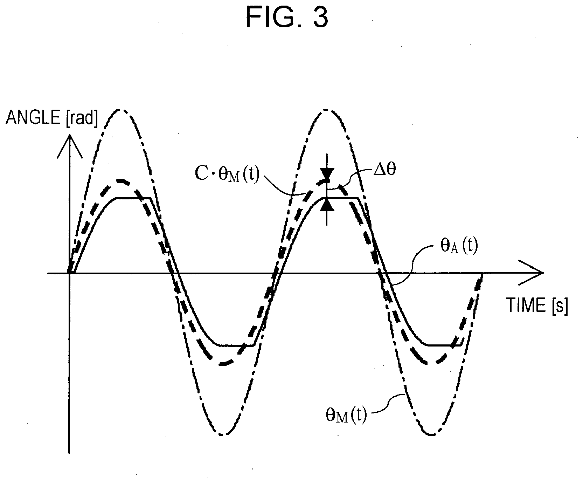

As shown in Fig. 3, the reciprocating motion (in particular, reciprocating reversal) of the arm 5 here is delayed in phase from the position command signal due to backlash in the speed reducer 7. If a force in the rotation direction generated by the inertial force or gravity acting on the arm 5 is smaller than the frictional force of the speed reducer 7, the speed reducer 7 performs angular transmission approximately in accordance with expression (1) described below.
[Expression 1] ${ \begin{matrix}\begin{matrix}{θ}_{A} \left(t\right) = C ⋅ {θ}_{M} \left(t\right) + Δ θ & \left({v}_{A}\left(t\right)<0\right) \\ {θ}_{A} \left(t\right) = C ⋅ {θ}_{M} \left(t\right) - Δ θ & \left({v}_{A}\left(t\right)>0\right)\end{matrix} \\ \begin{matrix}C ⋅ {θ}_{M} \left(t\right) - Δ θ < {θ}_{A} \left(t\right) < C ⋅ {θ}_{M} \left(t\right) + Δ θ & \left({v}_{A}\left(t\right)=0\right)\end{matrix}\end{matrix}$ (1)
*θ_{M}(t)*: rotation angle of motor
*θ_{A}(t)*: rotation angle of arm
*v_{A}(t)*: rotation angle speed of arm
*C*: reduction ratio
*Δθ*: amount of backlash in speed reducer

Fig. 3 is a graph showing a relationship in expression (1). In Fig. 3, a rotation angle θ_{M}(t) of the motor 6 is shown as a sine wave indicated by a dot-and-dash line. In Fig. 3, C·θ_{M}(t) obtained by multiplying the rotation angle θ_{M}(t) of the motor 6 by a reduction ratio C of the speed reducer 7 is indicated by a broken line. If the speed reducer 7 has no backlash, a waveform representing the output of the speed reducer 7 has the shape indicated by this broken line. In this case, the rotation angle θ_{A}(t) of the arm 5 attached to the speed reducer 7 has the same waveform as that indicated by the broken line. However, due to the presence of backlash, the waveform of the actual rotation angle θ_{A}(t) of the arm 5 is that indicated by a solid line in Fig. 3. Note that a sign that ends with (t) represents a signal whose value changes with time (seconds or s).

As compared to the output of the speed reducer 7 indicated by the broken line, the solid waveform representing the actual rotation angle θ_{A}(t) of the arm 5 is smaller in amplitude by the amount of backlash Δθ in the speed reducer 7. Also, due to the presence of backlash, the phase of the waveform of the actual rotation angle θ_{A}(t) is delayed from the phase of the rotation angle θ_{M}(t) of the motor 6 indicated by the dot-and-dash line.

For the rotation angle θ_{A}(t) of the arm 5 delayed in phase from the position command signal θᵣ(t) and the rotation angle θ_{M}(t) of the motor 6, it is necessary to make compensation (backlash compensation) for the loss of amplitude caused by backlash.

In the present embodiment, as described above, the loss of amplitude of the rotation angle θ_{A}(t) of the arm 5 caused by backlash is compensated for by adding the backlash correction signal θ_{BF}(t) shown in Fig. 2B to the position command signal θᵣ(t) to generate the final position command signal θ_{Fr}(t). Generation of the backlash correction signal θ_{BL}(t) and generation of the final position command signal θ_{Fr}(t) will now be described step by step.

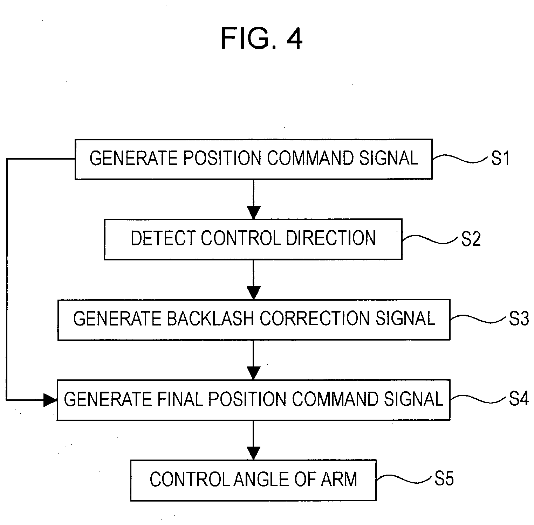

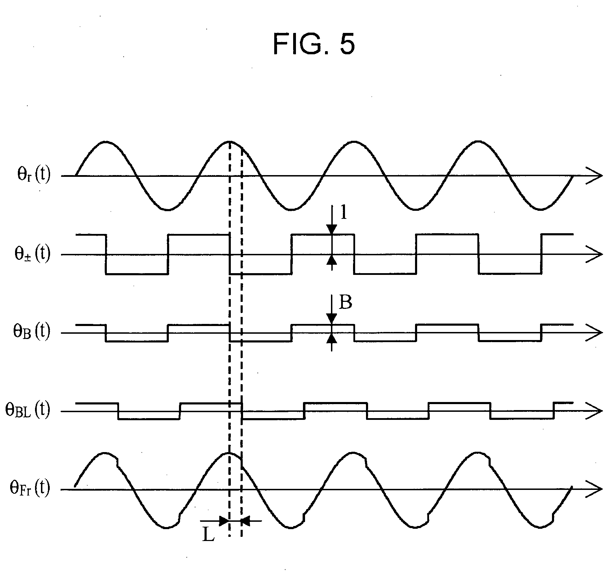

Generation of the backlash correction signal θ_{BL}(t) will be described with reference to Figs. 4 and 5.

The position command signal generating unit 11 of the control device 3 generates and outputs the position command signal θᵣ(t) indicating the rotation angle position of the arm 5 for carrying out weaving. The weaving requires the arm 5 to smoothly reciprocate with constant amplitude. Therefore, the position command signal generating unit 11 outputs the sinusoidal position command signal θᵣ(t) such as that shown in Fig. 5 (step S1 in Fig. 4: position command signal generating step).

From the position command signal θᵣ(t) output from the position command signal generating unit 11 in step S1, the control direction detecting unit 12 detects a direction (control direction) for controlling the rotation of the arm 5, and outputs a stepped control direction signal θ_{±}(t) in accordance with the detected control direction. The control direction signal θ_{±}(t) is a stepped signal having a positive or negative value of 1, such as that shown in Fig. 5, and is defined by expression (2) on the basis of a differential value of the position command signal θᵣ(t) (step S2 in Fig. 4: control direction detecting step).
[Expression 2] ${ \begin{matrix}{θ}_{\pm } \left(t\right) = 1 & \left(\frac{{dθ}_{r} \left(t\right)}{dt}>0\right) \\ {θ}_{\pm } \left(t\right) = - 1 & \left(\frac{{dθ}_{r} \left(t\right)}{dt}<0\right)\end{matrix}$ (2)

On the basis of the control direction signal θ_{±}(t) output from the control direction detecting unit 12 in step S2, the backlash quantity calculating unit 9 generates the backlash quantity signal θ_{B}(t) in accordance with the following procedure and outputs the backlash quantity signal θ_{B}(t) (backlash quantity calculating step). The delay time calculating unit 10 delays the backlash quantity signal θ_{B}(t) by the delay time L to generate the backlash correction signal θ_{BL}(t) in accordance with the following procedure, and outputs the backlash correction signal θ_{BL}(t) (delay time calculating step) (step S3 in Fig. 4).

First, by using the reduction ratio (C in expression (1)) of the speed reducer 7 and the amount of backlash in the speed reducer 7 (Δθ in expression (1)) measured in advance, the backlash quantity calculating unit 9 calculates the backlash compensation gain B in accordance with expression (3).
[Expression 3] $B = \frac{Δ θ}{C}$ (3)

Next, as shown in expression (4), the backlash quantity calculating unit 9 multiplies the control direction signal θ_{±}(t) output in step S2 by the backlash compensation gain B to generate the backlash quantity signal θ_{B}(t).
[Expression 4] ${θ}_{B} \left(t\right) = B ⋅ {θ}_{+} \left(t\right)$ (4)

If the backlash compensation gain B is a value less than 1, the generated backlash quantity signal θ_{B}(t) is a stepped signal having an amplitude smaller than that of the control direction signal θ_{±}(t), as shown in Fig. 5. Thus, on the basis of the control direction signal θ_{±}(t), the backlash quantity signal θ_{B}(t) having an amplitude corresponding to the amount of backlash can be obtained. This process is referred to as the backlash quantity calculating step.

Next, by delaying the obtained backlash quantity signal θ_{B}(t) by the delay time L without changing the waveform and the amplitude, the delay time calculating unit 10 generates and outputs the backlash correction signal θ_{BL}/t) shown in Fig. 5. The backlash correction signal θ_{BL}(t) is defined by expression (5). This process is referred to as the delay time calculating step. A method for setting the delay time L will be described later on.
[Expression 5]

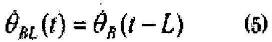

The backlash correction signal θ_{BL}(t), which is a technical feature of the present embodiment, can be obtained by the processes described above. With reference to Figs. 4 and 5, the subsequent process will be described which involves using the backlash correction signal θ_{BL}(t) to generate the final position command signal θ_{Fr}(t), and controlling the arm 5 in accordance with the generated final position command signal θ_{Fr}(t).

The signal adding unit 13 adds the backlash correction signal θ_{BL}(t) output from the delay time calculating unit 10 in step S3 to the position command signal θᵣ(t) output from the position command signal generating unit 11 in step S1, so as to generate and output the final position command signal θ_{Fr}(t) defined by expression (6) (step S4 in Fig. 4: signal adding step).

The series of steps S1 to S4 described above is referred to as a final position command signal generating step.
[Expression 6] ${θ}_{Fr} \left(t\right) = {θ}_{BL} \left(t\right) + {θ}_{r} \left(t\right)$ (6)

As shown in Fig. 5, in the waveform of the final position command signal θ_{Fr}(t) obtained by the procedure described above, each step caused by the backlash correction signal θ_{BL}(t) is delayed by the delay time L from the corresponding peak position.

The position control unit 14 calculates the command voltage of the motor 6 and controls the rotational position of the motor 6 such that the rotation angle signal of the motor 6 detected by the encoder 8 follows the final position command signal θ_{Fr}(t) output from the signal adding unit 13. Under the control of the position control unit 14, the motor 6 operates to control the angle of the arm 5 through the speed reducer 7 (step S5 in Fig. 4: position control step).

By the processing in steps S1 to S5 described above, weaving can be performed by the robot system 1 unaffected by backlash.

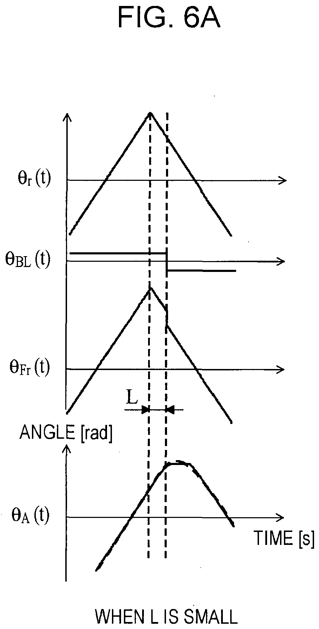

A method for setting the delay time L according to the present embodiment will now be described with reference to Figs. 6A to 6C. Figs. 6A to 6C show temporal changes of each signal and the rotation angle of the arm 5 obtained when the present embodiment is applied to the cases where a set value of the delay time L is small and large. Figs. 6A to 6C each show, from the top, the position command signal θᵣ(t), the backlash correction signal θ_{BL}(t), the final position command signal θ_{Fr}(t), and the rotation angle θ_{A}(t) of the arm 5 in this order.

In the present embodiment, the delay time calculating unit 10 sets the delay time L (seconds) to be longer than or equal to the length of time from when the control direction detected by the control direction detecting unit 12 is reversed to when the behavior of the arm 5 is actually reversed.

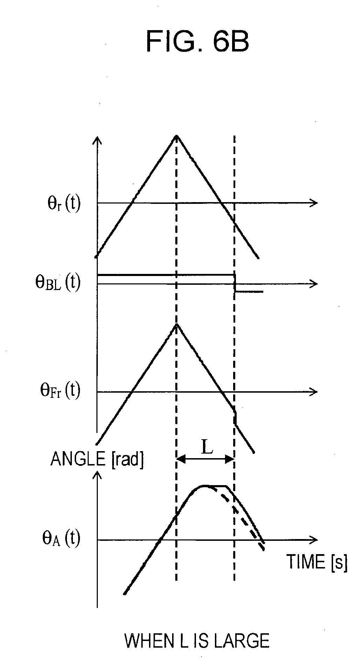

By setting the delay time L (seconds) as described above, the amplitude of the arm 5 becomes the same as that in the case without backlash. That is, the amplitude of the arm 5 indicated by a solid line becomes the same as the amplitude obtained in the case without backlash and indicated by a broken line (i.e., the position represented by the original position command signal θᵣ(t)) (see Fig. 6B).

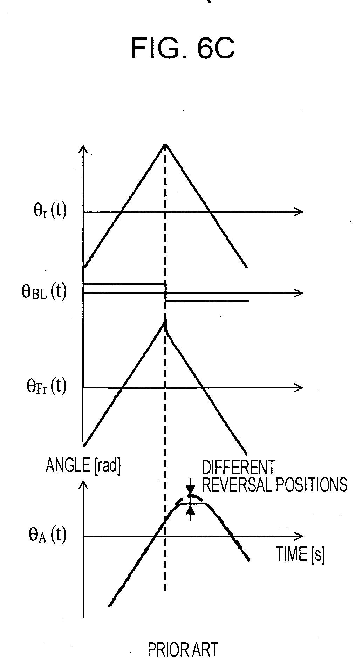

If the delay time L is set to be shorter than the length of time from when the control direction is reversed to when the behavior of the arm 5 is actually reversed, the amplitude of the arm 5 indicated by a solid line is smaller than the amplitude obtained in the case without backlash and indicated by a broken line (see Fig. 6A). However, as compared to the prior art illustrated in Fig. 6C where the delay time L is 0, the amplitude of the arm 5 is closer to that in the case without backlash. This indicates that if the delay time L is even slightly larger than 0, the reversal time (update time) of the backlash correction signal θ_{BL}(t) can be delayed, and the actual reversal time of the arm 5 becomes closer to the reversal time of the arm 5 in the case without backlash.

In the present embodiment, based on the idea described above, a set value of the delay time L is set to be larger than 0. Thus, the reversal position (amplitude) of the behavior of the arm 5 is brought closer to the reversal position (amplitude) in the case without backlash.

For example, if the delay time L is set to be longer than or equal to the length of time from when the control direction indicated by the position command signal θᵣ(t) is reversed to when the next reversal takes place, that is, if the delay time L set by the setting method described above is too large, the behavior of the arm 5 in the next reversal may be affected.

Also, when the position command signal θᵣ(t) is a periodic signal, if the delay time L is set to be longer than or equal to half the period of the position command signal θᵣ(t), the behavior of the arm 5 in the next reversal may be affected. In such a case, if the delay time L is set to be shorter than or equal to half the period of the position command signal θᵣ(t), the effect of the present embodiment described above can be achieved.

The method for determining the delay time L according to the first embodiment is as described above.

### [Second Embodiment]

A second embodiment of the present invention will now be described.

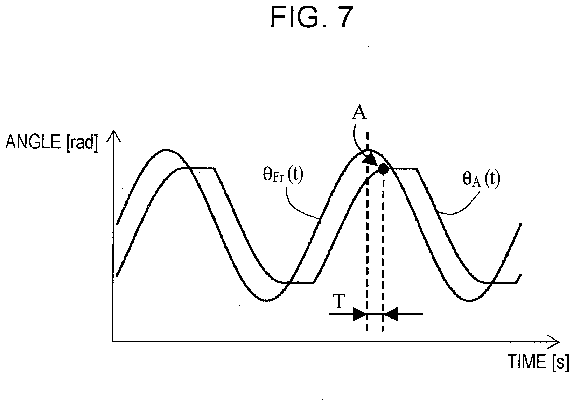

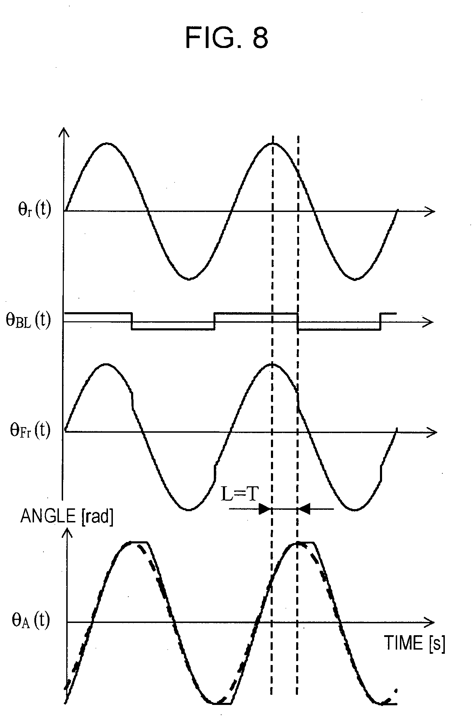

A configuration of the robot system 1 according to the present embodiment is substantially the same as that in the first embodiment described above. A difference from the first embodiment is how the delay time calculating unit 10 sets the delay time L. A method for setting the delay time L according to the second embodiment will be described with reference to Figs. 7 and 8.

The present embodiment will describe a method for accurately setting the delay time L in accordance with the following procedure when the position command signal θᵣ(t) generated by the position command signal generating unit 11 is a periodic signal with a frequency ω (rad/s).

### (Step 1)

First, as a signal (final position command signal θ_{Fr}(t)) input to the position control unit 14, a periodic signal (e.g., sinusoidal signal) with a frequency ω (rad/s), the periodic signal not including the backlash correction signal θ_{BL}(t), is adopted and the rotation angle θ_{A}(t) of the arm 5 is measured (by actual measurement). If there is no means for actually measuring the rotation angle θ_{A}(t) of the arm 5, C·θ_{M}(t) obtained by multiplying the rotation angle θ_{M}(t) of the motor 6 measured by the encoder 8 by the reduction ratio C of the speed reducer 7 is used as the rotation angle θ_{A}(t) of the arm 5 here.

Fig. 7 is a graph showing the final position command signal θ_{Fr}(t), which is a periodic signal with the frequency ω (rad/s), and the rotation angle θ_{A}(t) of the arm 5 actually measured and superimposed on the final position command signal θ_{Fr}(t).

### (Step 2)

As shown in Fig. 7, at a time point when the rotation angle θ_{A}(t) of the arm 5 actually measured periodically moves, a phase difference T between the final position command signal θ_{Fr}(t) and the rotation angle θ_{A}(t) of the arm 5 actually measured is determined. Then, the length of time corresponding to the phase difference T is set as the delay time L.

For example, for the final position command signal θ_{Fr}(t) and the rotation angle θ_{A}(t) of the arm 5 in Fig. 7, a time difference (phase difference T) between the corresponding peaks of their waveforms is determined, and the phase difference T is set as the delay time L. The peak of the rotation angle θ_{A}(t) of the arm 5 continues for a certain length of time due to the effect of backlash. Here, the initial time point at which the rotation angle θ_{A}(t) reaches the peak value (i.e., time at point A in Fig. 7) is regarded as a peak time for the rotation angle θ_{A}(t) of the arm 5, and the phase difference T is determined.

With reference to Fig. 8, an effect of the present embodiment will be described, which is achieved when the delay time L is set as described above. Fig. 8 shows temporal changes of each signal and the rotation angle θ_{A}(t) of the arm 5 obtained when the present embodiment is applied to the robot system 1.

Fig. 8 shows, from the top, the position command signal θᵣ(t), the backlash correction signal θ_{BL}(t), the final position command signal θ_{Fr}(t), and the rotation angle θ_{A}(t) of the arm 5 in this order. The backlash correction signal θ_{BL}(t) is delayed by the delay time L set in accordance with the procedure described above. In the graph at the bottom of Fig. 8, a solid line represents the rotation angle θ_{A}(t) of the arm 5 obtained in the case of applying the present embodiment, and a broken line represents an amplitude obtained when the speed reducer 7 has no backlash (i.e., a position indicated by the original position command signal θᵣ(t)). This graph shows that because of the backlash compensation according to the present embodiment, the amplitude of the behavior of the arm 5 obtained when the position command signal θᵣ(t) is a periodic signal (sinusoidal signal here) is made substantially the same as that in the case without backlash.

### [Third Embodiment]

A third embodiment of the present invention will now be described.

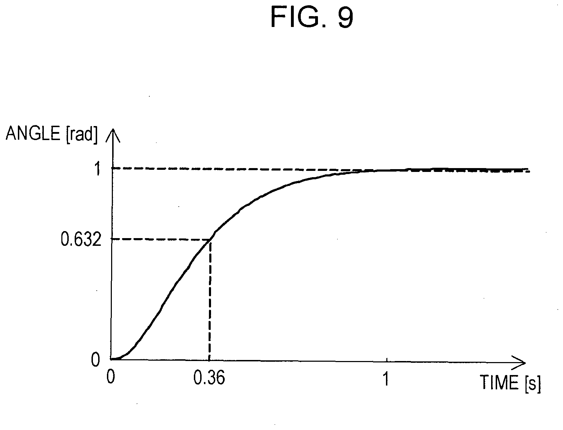

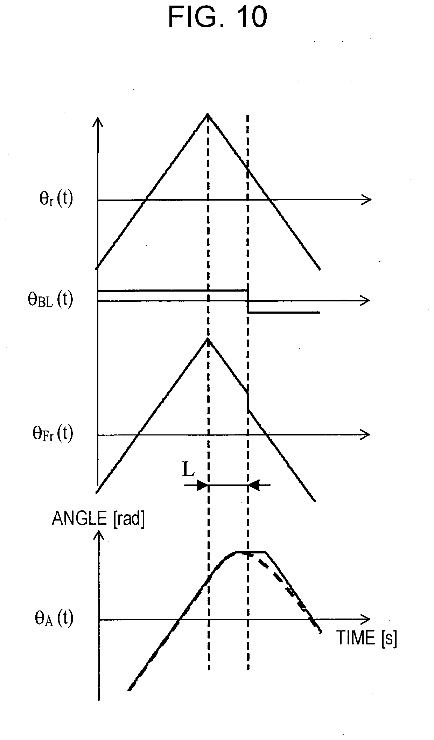

A configuration of the robot system 1 according to the present embodiment is substantially the same as those in the first and second embodiments described above. A difference from the first and second embodiments is how the delay time calculating unit 10 sets the delay time L. A method for setting the delay time L according to the present embodiment will be described with reference to Figs. 9 and 10.

In the present embodiment, the delay time L is determined on the basis of the rotation angle θ_{A}(t) of the arm 5 actually measured when a step signal is input to the position control unit 14. This setting method which involves using a step signal is effective even when the position command signal θᵣ(t) generated by the position command signal generating unit 11 is not a periodic signal. A procedure for setting the delay time L will be sequentially described below.

### (Step 1)

First, as a signal (final position command signal θ_{Fr}(t)) input to the position control unit 14, a signal (step signal) whose value remains constant after a time point 0 (seconds) is adopted and the rotation angle θ_{A}(t) of the arm 5 is measured (actual measurement). If there is no means for actually measuring the rotation angle θ_{A}(t) of the arm 5, C·θ_{M}(t) obtained by multiplying the rotation angle θ_{M}(t) of the motor 6 measured by the encoder 8 by the reduction ratio C of the speed reducer 7 is used as the rotation angle θ_{A}(t) of the arm 5 here.

Fig. 9 is a graph showing an actually measured value of a step response of the rotation angle θ_{A}(t) of the arm 5 to the step signal input to the position control unit 14. In the step response shown in Fig. 9, the rotation angle θ_{A}(t) of the arm 5 reaches a steady-state value 1 in a certain time after the step signal is input.

### (Step 2)

On the basis of the graph of Fig. 9, the time (time constant) required for the actually measured rotation angle θ_{A}(t) of the arm 5 to reach about 63.2% of the steady-state value is determined, and the time constant is used as the delay time L. When the waveform of the rotation angle θ_{A}(t) of the arm 5 shown in Fig. 9 is obtained using a step signal with a magnitude of 1 (radian), the time taken to reach 0.632 (radians) is 0.36 (seconds), which is the time constant used as the delay time L.

With reference to Fig. 10, an effect of the present embodiment will be described, which is achieved when the delay time L is set using a time constant. Fig. 10 shows temporal changes of each signal and the rotation angle θ_{A}(t) of the arm 5 obtained when the present embodiment is applied to the robot system 1.

Fig. 10 shows, from the top, the position command signal θᵣ(t), the backlash correction signal θ_{BL}(t), the final position command signal θ_{Fr}(t), and the rotation angle θ_{A}(t) of the arm 5 in this order. The backlash correction signal θ_{BL}(t) is delayed by the delay time L set by using the time constant described above. In the graph at the bottom of Fig. 10, a solid line represents the rotation angle θ_{A}(t) of the arm 5 obtained in the case of applying the present embodiment, and a broken line represents an amplitude obtained when the speed reducer 7 has no backlash (i.e., a position indicated by the original position command signal θᵣ(t)). This graph shows that because of the backlash compensation according to the present embodiment, the amplitude of the behavior of the arm 5 obtained when the position command signal θᵣ(t) is a periodic signal (sinusoidal signal here) is made substantially the same as that in the case without backlash.

By setting the delay time L using the time constant described above, the delay time L becomes suitable for the system of the robot system 1. Therefore, after being reversed, the behavior of the arm 5 quickly becomes closer to that in the case without backlash.

### [Fourth Embodiment]

A fourth embodiment of the present invention will now be described.

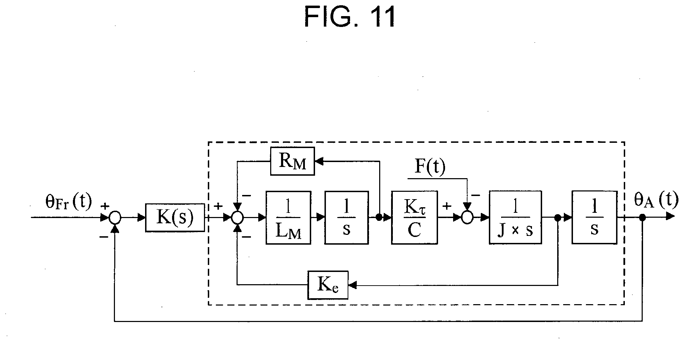

A configuration of the robot system 1 according to the present embodiment is substantially the same as those in the first to third embodiments described above. A difference from the first to third embodiments is how the delay time calculating unit 10 sets the delay time L. A method for setting the delay time L according to the present embodiment will be described with reference to Fig. 11.

The methods of the second and third embodiments involve actually inputting a step signal or a sinusoidal signal into the robot system 1 and actually measuring the rotation angle θ_{A}(t) of the arm 5. In the method of the present embodiment, the delay time L is set on the basis of a model of the welding robot 2. The following describes a procedure for setting the delay time L using the model of the welding robot 2.

First, a process from the final position command signal θ_{Fr}(t), which is a signal input to the position control unit 14, to the rotation angle θ_{A}(t) of the arm 5 is modeled in the form of a block diagram of Fig. 11. Note that this is in the case where the speed reducer 7 has no backlash.

In Fig. 11, the letter "s" is a Laplace operator. A region surrounded by a broken line in Fig. 11 is a block diagram showing the motor 6, the speed reducer 7, and the arm 5 as a simple model. J represents a moment of inertia of the arm 5 obtained when moments of inertia of the motor 6 and the speed reducer 7 are regarded as all being present in the arm 5, and C represents a reduction ratio of the speed reducer 7. R_{M} represents an internal resistance of the motor 6, and L_{M} represents an internal inductance of the motor 6. K_{τ} represents a torque constant, and Ke represents a back-electromotive force constant. F(t) represents a frictional force acting on the arm 5.

K(s) represents the position control unit 14 and is, for example, PI control expressed by expression (7).
[Expression 7] ${k}_{P} + {k}_{I} / s$ (7)
*s*: Laplace operator
*k_{P}*: proportional gain
*k_{I}*: integral gain

A transfer function from the final position command signal θ_{Fr}(t) to the rotation angle θ_{A}(t) of the arm 5 can be expressed by expression (8) below.
[Expression 8] ${θ}_{A} = \frac{{K}_{τ} ⋅ \left({k}_{p}⋅s+{k}_{I}\right)}{J ⋅ {L}_{M} ⋅ C ⋅ {s}^{4} + J ⋅ {R}_{M} ⋅ C ⋅ {s}^{3} + {K}_{τ} ⋅ {K}_{e} ⋅ {s}^{2} + {K}_{τ} ⋅ \left({k}_{p}⋅s+{k}_{I}\right)} {θ}_{Fr}$ (8)
*J*: moment of inertia of arm obtained when moments of inertia of motor and speed reducer are regarded as all being present in arm
*L_{M}:* internal inductance of motor
*C*: reduction ratio of speed reducer
*R_{M}:* internal resistance of motor
*K_{τ}*: torque constant
*Kₑ*: back-electromotive force constant
*F(t)*: frictional force acting on arm
*s*: Laplace operator representing integral
*k_{P}*: proportional gain
*k_{I}*: integral gain

Here, a transfer function from the final position command signal θ_{Fr}(t) to the rotation angle θ_{A}(t) of the arm 5 in the expression described above will be expressed as G(s).

For this model, as in the third embodiment described above, a simulation is performed in which a step signal is input to determine the output, and thus to determine the delay time L.

When the position command signal θᵣ(t) generated by the position command signal generating unit 11 is a sinusoidal signal with a frequency ω (rad/s), a phase delay argG(jω) corresponding to the frequency ω (rad/s) in the range from the final position command signal θ_{Fr}(t) to the rotation angle θ_{A}(t) of the arm 5 is determined, where j represents an imaginary unit, G(jω) is obtained by substituting jω for s of G(s), and argG(jω) represents an argument of G(jω). Then, -argG(jω)/ω is used as the delay time L.

The delay time L is thus determined from the model of the welding robot 2. Therefore, unlike the second and third embodiments described above, the delay time L can be set without actually performing a measurement experiment with an actual device.

Even when the delay time L set in the present embodiment is used to generate the backlash correction signal θBL(t), the same effect as those of the embodiments described above can be achieved.

The embodiments disclosed herein should be considered illustrative, not restrictive, in all respects.

### Reference Signs List

- 1:: robot system
- 2:: welding robot
- 3:: control device
- 4:: welding tool
- 5:: arm
- 6:: motor
- 7:: speed reducer
- 8:: encoder
- 9:: backlash quantity calculating unit
- 10:: delay time calculating unit
- 11:: position command signal generating unit
- 12:: control direction detecting unit
- 13:: signal adding unit
- 14:: position control unit
- 15:: controller

## Claims

1. A control method that performs position control of a control object while compensating for backlash in the control object, the control object being configured to move periodically, the control method comprising:
a final position command signal (θ_{Fr}(t)) generating step of generating a final position command signal (θ_{Fr}(t)) by shifting a backlash quantity signal (θ_{B}(t)) that compensates for the backlash and adding the shifted backlash quantity signal (θ_{BL}(t)) to a position command signal (θᵣ(t)) indicating a position of the control object;
a position control step of performing position control of the control object on the basis of the final position command signal (θ_{Fr}(t)) generated in the final position command signal (θ_{Fr}(t)) generating step,
wherein the final position command signal (θ_{Fr}(t)) generating step includes
a position command signal (θᵣ(t)) generating step of generating the position command signal (θᵣ(t));
a control direction detecting step of detecting, on the basis of the position command signal (θᵣ(t)) generated in the position command signal (θᵣ(t)) generating step, a control direction for controlling the control object;
a backlash quantity calculating step of generating, in accordance with the control direction detected in the control direction detecting step, a backlash quantity signal (θ_{B}(t)) for compensating for the amount of backlash in the control object;
a delay time calculating step of generating a backlash correction signal by delaying, by a predetermined delay time with respect to the position command signal (θᵣ(t)), the backlash quantity signal (θ_{B}(t)) generated in the backlash quantity calculating step;
a signal adding step of generating a final position command signal (θ_{Fr}(t)) by adding the backlash correction signal generated in the delay time calculating step to the position command signal (θᵣ(t)),
wherein the position control step controls the position of the control object on the basis of the final position command signal (θ_{Fr}(t)) generated in the signal adding step, and
wherein a length of time less than or equal to half a period of the position command signal (θᵣ(t)) formed by a periodic signal is set as the predetermined delay time used in the delay time calculating step.

2. The control method according to Claim 1, wherein an actual output of the control object driven on the basis of the position command signal (θᵣ(t)) formed by a periodic signal is determined in advance, a phase difference between the position command signal (θᵣ(t)) and the actual output is determined, and the determined phase difference is set as the predetermined delay time used in the delay time calculating step.

3. The control method according to Claim 1, wherein a control model obtained by modeling the control object is prepared; and
a model output obtained when the position command signal (θᵣ(t)) formed by a periodic signal is input to the control model is determined, a phase difference between the position command signal (θᵣ(t)) and the model output is determined, and the determined phase difference is set as the predetermined delay time used in the delay time calculating step.

4. The control method according to Claim 1, wherein an actual output of the control object driven on the basis of the position command signal (θᵣ(t)) formed by a step signal is determined in advance, a time constant based on a response time required for the actual output to reach the position indicated by the position command signal (θᵣ(t)) is determined, and the time constant is set as the predetermined delay time used in the delay time calculating step.

5. A control device (15(3)) that performs position control of a control object while compensating for backlash in the control object, the control object being configured to move periodically, the control device (15(3)) comprising
a controller configured to generate a final position command signal (θ_{Fr}(t)) by shifting a backlash quantity signal (θ_{B}(t)) that compensates for the backlash and adding the shifted backlash quantity signal (θ_{BL}(t)) to a position command signal (θᵣ(t)) indicating a position of the control object, the controller being configured to perform position control of the control object on the basis of the generated final position command signal (θ_{Fr}(t)), wherein the controller includes
a position command signal (θᵣ(t)) generating unit (11) configured to generate the position command signal (θᵣ(t));
a control direction detecting unit (12) configured to detect, on the basis of the position command signal (θᵣ(t)) generated by the position command signal (θᵣ(t)) generating unit (11), a control direction for controlling the control object;
a backlash quantity calculating unit (9) configured to generate, in accordance with the control direction detected by the control direction detecting unit (12), a backlash quantity signal (θ_{B}(t)) for compensating for the amount of backlash in the control object;
a delay time calculating unit (10) configured to generate a backlash correction signal by delaying, by a predetermined delay time with respect to the position command signal (θᵣ(t)), the backlash quantity signal (θ_{B}(t)) generated by the backlash quantity calculating unit (9);
a signal adding unit (13) configured to generate a final position command signal (θ_{Fr}(t)) by adding the backlash correction signal generated by the delay time calculating unit (10) to the position command signal (θᵣ(t)); and
a position control unit (14) configured to control the position of the control object on the basis of the final position command signal (θ_{Fr}(t)) generated by the signal adding unit (13), and
wherein a length of time less than or equal to half a period of the position command signal (θᵣ(t)) formed by a periodic signal is set as the predetermined delay time used in the delay time calculating step.

## Patentansprüche

1. Ein Steuerverfahren, das eine Positionssteuerung eines Steuerobjekts durchführt, während es ein Spiel im Steuerobjekt kompensiert, wobei das Steuerobjekt so konfiguriert ist, dass es sich periodisch bewegt, wobei das Steuerverfahren Folgendes umfasst:
einen Endpositions-Steuersignal (θ_{Fr}(t)) - Erzeugungsschritt zum Erzeugen eines Endpositions-Steuersignals (θ_{Fr}(t)) durch Verschieben eines Spielmengensignals (θ_{B}(t)), das das Spiel kompensiert, und Addieren des verschobenen Spielmengensignals (θ_{BL}(t)) zu einem Positions-Steuersignal (θᵣ(t)), das eine Position des Steuerobjekts anzeigt;
einen Positionssteuerschritt zum Durchführen einer Positionssteuerung des Steuerobjekts auf der Grundlage des Endpositions-Steuersignals (θ_{Fr}(t)), das im Endpositions-Steuersignal (θ_{Fr}(t)) - Erzeugungsschritt erzeugt wird,
wobei der Endpositions-Steuersignal (θ_{Fr}(t)) - Erzeugungsschritt Folgendes beinhaltet:
einen Positions-Steuersignal (θᵣ(t)) - Erzeugungsschritt, der das Positions-Steuersignal (θᵣ(t)) erzeugt;
einen Steuerrichtungs-Erfassungsschritt zum Erfassen, auf der Grundlage des im Positions-Steuersignal (θᵣ(t)) - Erzeugungsschritt erzeugten Positions-Steuersignal (θᵣ(t)), einer Steuerrichtung zum Steuern des Steuerobjekts;
einen Spielmengen-Berechnungsschritt zum Erzeugen eines Spielmengensignals (θ_{B}(t)) zum Kompensieren des Spielbetrags im Steuerobjekt in Übereinstimmung mit der in dem Steuerrichtungs-Erfassungsschritt erfassten Steuerrichtung;
einen Verzögerungszeit-Berechnungsschritt zum Erzeugen eines Spielkorrektursignals durch Verzögern, um eine vorbestimmte Verzögerungszeit in Bezug auf das Positions-Steuersignal (θᵣ(t)), des in dem Spielmengen-Berechnungsschritt erzeugten Spielmengensignals (θ_{B}(t));
einen Signaladditionsschritt zum Erzeugen eines Endpositions-Steuersignals (θ_{Fr}(t)) durch Addieren des im Verzögerungszeit-Berechnungsschritt erzeugten Spielkorrektursignals zum Positions-Steuersignal (θᵣ(t)),
wobei der Positionssteuerschritt die Position des Steuerobjekts auf der Grundlage des Endpositions-Steuersignals (θ_{Fr}(t)) steuert, das im Signaladditionsschritt erzeugt wird, und
wobei eine Zeitdauer, die kleiner oder gleich einer halben Periode des durch ein periodisches Signal gebildeten Positions-Steuersignals (θᵣ(t)) ist, als die vorbestimmte Verzögerungszeit eingestellt wird, die im Verzögerungszeit-Berechnungsschritt verwendet wird.

2. Das Steuerverfahren nach Anspruch 1, wobei ein tatsächlicher bzw. aktueller (*actual*) Ausgang des Steuerobjektes, das auf der Grundlage des durch ein periodisches Signal gebildeten Positions-Steuersignals (θᵣ(t)) angesteuert bzw. angetrieben wird (*driven*), im Voraus bestimmt wird, wobei eine Phasendifferenz zwischen dem Positions-Steuersignal (θᵣ(t)) und dem tatsächlichen Ausgang bestimmt wird, und wobei die bestimmte Phasendifferenz als die vorbestimmte Verzögerungszeit eingestellt wird, die im Verzögerungszeit-Berechnungsschritt verwendet wird.

3. Das Steuerverfahren nach Anspruch 1, wobei ein durch Modellierung des Steuerobjekts erhaltenes Steuermodell erstellt wird; und wobei
eine Modellausgabe, die erhalten wird, wenn das durch ein periodisches Signal gebildete Positions-Steuersignal (θᵣ(t)) in das Steuermodell eingegeben wird, bestimmt wird, wobei eine Phasendifferenz zwischen dem Positions-Steuersignal (θᵣ(t)) und der Modellausgabe bestimmt wird, und wobei die bestimmte Phasendifferenz als die vorbestimmte Verzögerungszeit eingestellt wird, die im Verzögerungszeit-Berechnungsschritt verwendet wird.

4. Das Steuerverfahren nach Anspruch 1, wobei ein tatsächlicher Ausgang des Steuerobjekts, das auf der Grundlage des durch ein Stufensignal gebildeten Positions-Steuersignals (θᵣ(t)) angesteuert wird, im Voraus bestimmt wird, wobei eine Zeitkonstante auf der Grundlage einer Reaktionszeit bestimmt wird, die erforderlich ist, damit der tatsächliche Ausgang die durch das Positions-Steuersignal (θᵣ(t)) angegebene Position erreicht, und wobei die Zeitkonstante als die vorbestimmte Verzögerungszeit eingestellt wird, die im Verzögerungszeit-Berechnungsschritt verwendet wird.

5. Eine Steuervorrichtung (15(3)), die eine Positionssteuerung eines Steuerobjekts durchführt, während sie ein Spiel im Steuerobjekt kompensiert, wobei das Steuerobjekt so konfiguriert ist, dass es sich periodisch bewegt, wobei die Steuervorrichtung (15(3)) Folgendes umfasst:
eine Steuerung, die so konfiguriert ist, dass sie ein Endpositions-Steuersignal (θ_{Fr}(t)) erzeugt, indem sie ein das Spiel kompensierendes Spielmengensignal (θ_{B}(t)), verschiebt und das verschobene Spielmengensignal (θ_{BL}(t)) zu einem Positions-Steuersignal (θᵣ(t)) addiert, das eine Position des Steuerobjekts angibt, wobei die Steuerung so konfiguriert ist, dass sie auf der Grundlage des erzeugten Endpositions-Steuersignals (θ_{Fr}(t)) eine Positionssteuerung des Steuerobjekts durchführt, wobei die Steuerung Folgendes beinhaltet:
ein Positions-Steuersignal (θᵣ(t)) - Erzeugungseinheit (11), die so konfiguriert ist, dass sie das Positions-Steuersignal (θᵣ(t)) erzeugt;
eine Steuerrichtungs-Erfassungseinheit (12), die so konfiguriert ist, dass sie, auf der Grundlage des von der Positions-Steuersignal (θᵣ(t)) - Erzeugungseinheit (11) erzeugten Positions-Steuersignals (θᵣ(t)), eine Steuerrichtung zum Steuern des Steuerobjekts erfasst;
eine Spielmengen-Berechnungseinheit (9), die so konfiguriert ist, dass sie, in Übereinstimmung mit der von der Steuerrichtungs-Erfassungseinheit (12) erfassten Steuerrichtung, ein Spielmengensignal (θ_{B}(t)) zum Kompensieren des Spielbetrags im Steuerobjekt erzeugt;
eine Verzögerungszeit-Berechnungseinheit (10), die so konfiguriert ist, dass sie ein Spielkorrektursignal erzeugt, indem sie das von der Spielmengen-Berechnungseinheit (9) erzeugte Spielmengensignal (θ_{B}(t)) um eine vorbestimmte Verzögerungszeit in Bezug auf das Positions-Steuersignal (θᵣ(t)) verzögert;
eine Signaladdiereinheit (13), die so konfiguriert ist, dass sie ein Endpositions-Steuersignal (θ_{Fr}(t)) erzeugt, indem sie das von der Verzögerungszeit-Berechnungseinheit (10) erzeugte Spielkorrektursignal zum Positions-Steuersignal (θᵣ(t)) addiert; und
eine Positionssteuereinheit (14), die so konfiguriert ist, dass sie die Position des Steuerobjekts auf der Grundlage des von der Signaladdiereinheit (13) erzeugten Endpositions-Steuersignals (θ_{Fr}(t)) steuert, und
wobei eine Zeitdauer, die kleiner oder gleich einer halben Periode des durch ein periodisches Signal gebildeten Positions-Steuersignals (θᵣ(t)) ist, als vorbestimmte Verzögerungszeit eingestellt wird, die im Verzögerungszeit-Berechnungsschritt verwendet wird.

## Revendications

1. Un procédé de commande qui effectue une commande de position d'un objet de commande tout en compensant le jeu dans l'objet de commande, l'objet de commande étant configuré pour se déplacer périodiquement, le procédé de commande comprenant :
une étape de génération de signal de commande de position finale (θ_{Fr}(t)) consistant à générer un signal de commande de position finale (θ_{Fr}(t)) en décalant un signal de quantité de jeu (θ_{B}(t)) qui compense le jeu, et en ajoutant le signal de quantité de jeu décalé (θ_{BL}(t)) à un signal de commande de position (θᵣ(t)) indiquant une position de l'objet de commande ;
une étape de commande de position consistant à effectuer une commande de position de l'objet de commande sur la base du signal de commande de position finale (θ_{Fr}(t)) généré dans l'étape de génération de signal de commande de position finale (θ_{Fr}(t)),
sachant que l'étape de génération de signal de commande de position finale (θ_{Fr}(t)) inclut
une étape de génération de signal de commande de position (θᵣ(t)) consistant à générer le signal de commande de position (θᵣ(t)) ;
une étape de détection de direction de commande consistant à détecter, sur la base du signal de commande de position (θᵣ(t)) généré dans l'étape de génération de signal de commande de position (θᵣ(t)), une direction de commande pour commander l'objet de commande ;
une étape de calcul de quantité de jeu consistant à générer, conformément à la direction de commande détectée dans l'étape de détection de direction de commande, un signal de quantité de jeu (θ_{B}(t)) pour compenser la quantité de jeu dans l'objet de commande ;
une étape de calcul de temps de retard consistant à générer un signal de correction de jeu en retardant, d'un temps de retard prédéterminé par rapport au signal de commande de position (θᵣ(t)), le signal de quantité de jeu (θ_{B}(t)) généré dans l'étape de calcul de quantité de jeu ;
une étape d'ajout de signal consistant à générer un signal de commande de position finale (θ_{Fr}(t)) en ajoutant le signal de correction de jeu, généré dans l'étape de calcul de temps de retard, au signal de commande de position (θᵣ(t)),
sachant que l'étape de commande de position commande la position de l'objet de commande sur la base du signal de commande de position finale (θ_{Fr}(t)) généré dans l'étape d'ajout de signal, et
sachant qu'une durée inférieure ou égale à la moitié d'une période du signal de commande de position (θᵣ(t)) constitué par un signal périodique est fixée comme le temps de retard prédéterminé utilisé dans l'étape de calcul de temps de retard.

2. Le procédé de commande d'après la revendication 1, sachant qu'une sortie réelle ou encore actuelle (*actual*) de l'objet de commande entraîné (*driven*) sur la base du signal de commande de position (θᵣ(t)) constitué par un signal périodique est déterminée à l'avance, qu'une différence de phase entre le signal de commande de position (θᵣ(t)) et la sortie réelle est déterminée, et que la différence de phase déterminée est fixée comme le temps de retard prédéterminé utilisé dans l'étape de calcul du temps de retard.

3. Le procédé de commande d'après la revendication 1, sachant qu'un modèle de commande obtenu en modélisant l'objet de commande est préparé ; et que
une sortie de modèle, obtenue lorsque le signal de commande de position (θᵣ(t)) constitué par un signal périodique est entré dans le modèle de commande, est déterminée, qu'une différence de phase entre le signal de commande de position (θᵣ(t)) et la sortie de modèle est déterminée, et que la différence de phase déterminée est fixée comme le temps de retard prédéterminé utilisé dans l'étape de calcul du temps de retard.

4. Le procédé de commande d'après la revendication 1, sachant que la sortie réelle de l'objet de commande, entraîné sur la base du signal de commande de position (θᵣ(t)) constitué par un signal pas à pas, est déterminée à l'avance, qu'une constante de temps basée sur un temps de réponse nécessaire pour que la sortie réelle atteigne la position indiquée par le signal de commande de position (θᵣ(t)) est déterminée, et que la constante de temps est fixée comme le temps de retard prédéterminé utilisé dans l'étape de calcul du temps de retard.

5. Un dispositif de commande (15(3)) qui effectue une commande de position d'un objet de commande tout en compensant le jeu dans l'objet de commande, l'objet de commande étant configuré pour se déplacer périodiquement, le dispositif de commande (15(3)) comprenant
une commande configurée pour générer un signal de commande de position finale (θ_{Fr}(t)) en décalant un signal de quantité de jeu (θ_{B}(t)), qui compense le jeu, et en ajoutant le signal de quantité de jeu décalé (θ_{BL}(t)) à un signal de commande de position (θᵣ(t)) indiquant une position de l'objet de commande, la commande étant configurée pour effectuer une commande de position de l'objet de commande sur la base du signal de commande de position finale (θ_{Fr}(t)) généré, sachant que la commande inclut
une unité de génération (11) de signal de commande de position (θᵣ(t)) configurée pour générer le signal de commande de position (θᵣ(t)) ;
une unité de détection de direction de commande (12) configurée pour détecter, sur la base du signal de commande de position (θᵣ(t)) généré par l'unité de génération (11) de signal de commande de position (θᵣ(t)), une direction de commande pour commander l'objet de commande ;
une unité de calcul de quantité de jeu (9) configurée pour générer, conformément à la direction de commande détectée par l'unité de détection de direction de commande (12), un signal de quantité de jeu (θ_{B}(t)) pour compenser la quantité de jeu dans l'objet de commande ;
une unité de calcul de temps de retard (10) configurée pour générer un signal de correction de jeu en retardant, d'un temps de retard prédéterminé par rapport au signal de commande de position (θᵣ(t)), le signal de quantité de jeu (θ_{B}(t)) généré par l'unité de calcul de quantité de jeu (9) ;
une unité d'ajout de signal (13) configurée pour générer un signal de commande de position finale (θ_{Fr}(t)) en ajoutant le signal de correction de jeu généré par l'unité de calcul de temps de retard (10) au signal de commande de position (θᵣ(t)); et
une unité de commande de position (14) configurée pour commander la position de l'objet de commande sur la base du signal de commande de position finale (θ_{Fr}(t)) généré par l'unité d'ajout de signal (13), et
sachant que la durée inférieure ou égale à la moitié d'une période du signal de commande de position (θᵣ(t)) constitué par un signal périodique est fixée comme le temps de retard prédéterminé utilisé dans l'étape de calcul du temps de retard.
